(19) Europäisches Patentamt / European Patent Office / Office européen des brevets

(11) **EP 4 043 755 B1**

(12) **EUROPEAN PATENT SPECIFICATION**

(45) Date of publication and mention
of the grant of the patent:
**17.07.2024   Bulletin 2024/29**

(21) Application number: **19948479.1**

(22) Date of filing: **07.10.2019**

(51) International Patent Classification (IPC):
*F16H 3/083* (2006.01)     *F16H 63/30* (2006.01)
*F16H 63/18* (2006.01)

(52) Cooperative Patent Classification (CPC):
**F16H 3/089; F16H 63/30;** F16H 63/18;
F16H 2003/0811; F16H 2003/0818;
F16H 2063/3093; F16H 2200/0052

(86) International application number:
**PCT/JP2019/039443**

(87) International publication number:
**WO 2021/070213 (15.04.2021 Gazette 2021/15)**

(54) **TRANSMISSION**

GETRIEBE

TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.08.2022   Bulletin 2022/33**

(73) Proprietors:
  • **Univance Corporation**
    **Kosai-city, Shizuoka 431-0494 (JP)**
  • **Ikeya Formula Co., Ltd.**
    **Tochigi 322-0251 (JP)**

(72) Inventors:
  • **YAMAUCHI Yoshihiro**
    **Kosai- City, Shizuoka 4310494 (JP)**
  • **KATO Tadahiko**
    **Kosai- City, Shizuoka 4310494 (JP)**
  • **IKEYA Shinji**
    **Kanuma-shi Tochigi 322-0251 (JP)**
  • **TERAOKA Masao**
    **Kanuma-shi Tochigi 322-0251 (JP)**

(74) Representative: **Prüfer & Partner mbB**
**Patentanwälte · Rechtsanwälte**
**Sohnckestraße 12**
**81479 München (DE)**

(56) References cited:
**JP-A- 2016 061 411    JP-A- 2016 061 411
JP-A- 2018 044 613    JP-A- 2018 044 613
US-A- 4 096 932**

**Description**

TECHNICAL FIELD

The present invention relates to a transmission including a positive clutch.

BACKGROUND ART

A transmission in which a gear having dog teeth formed at an end surface thereof in an axial direction is disposed around a shaft, and the gear is selectively connected to the shaft by using a positive clutch, has been known (Patent Document 1). In Patent Document 1 (see FIG. 9 and FIG. 10 in particular), an annular clutch ring is disposed at an outer periphery of an annular hub connected to the shaft. The hub has, at an outer peripheral surface thereof, grooves parallel to the shaft, and cylindrical pins to be fitted in the grooves are disposed at an inner peripheral surface of the clutch ring. A surface, of each dog tooth, facing one side in a circumferential direction is an inclined surface that generates a thrust in a direction in which the gear and the clutch ring are separated from each other, while a surface, of each dog tooth, facing the other side in the circumferential direction is a surface that does not cause the gear and the clutch ring to be separated from each other when transmitting a torque.

When gear shift from a low speed stage to a high speed stage is performed, if dog teeth of the clutch ring mesh with dog teeth of each of two gears having different gear ratios, force in a rotation direction is converted to force in the axial direction by the inclined surfaces of the dog teeth. Then, the clutch ring, meshing with the low-speed-stage gear which is lower in rotation speed than the high-speed-stage gear, is pushed out in the axial direction by an internal circulation torque. When the higherspeed-stage gear is connected to the shaft and meshing of the low-speed-stage gear with the clutch ring is released, the gear shift is completed.

Patent Document 2, on which the two-part form is based, relates to a manually shiftable transmission for use in automobiles with the usual driven shaft, axially aligned with a drive shaft. The usual gears are present on said shafts to transmit a drive from any one gear to said driven shaft. Four sleeves, or driven members, are mounted by splines upon the main shaft and each is slidable thereon longitudinally of the shaft to pair with a gear. Each pair of driven member-and-gear has confronting lateral faces: on each said lateral face is formed one or more dogs to engage with the corresponding dog on a respective confronting face to transmit a drive from the gear to the driven member. The driven members are adapted for sliding travel by shifting forks between a neutral position and a drive position, in which the driven dogs on the driven member engage with the driving dogs on its companion gear. The dogs are formed with cam faces so inclined to said lateral faces that when a successive gear is engaged by its companion driven member, the dogs of an earlier engaged driven member will disengage from the driving dogs, and said cam faces will co-act to impel the driven member in sliding travel on the driven shaft to a neutral position.

Patent Document 3 relates to a transmission for a vehicle comprising a structure to release the engagement of engagement teeth which are released in the engagement during a gear change, and gearing teeth of a transmission gear.

PRIOR ART DOCUMENT

PATENT DOCUMENT

Patent Document 1: JP 2016 061411 A
Patent Document 2: US 4 096 932 A
Patent Document 3: JP 2018 044613 A

SUMMARY OF THE INVENTION

PROBLEM TO BE SOLVED BY THE INVENTION

In the technology described in Patent Document 1, however, when each pin of the clutch ring moves in the corresponding groove of the hub and thereby the clutch ring moves in the axial direction, the clutch ring is inclined with respect to the hub by an amount of a gap in a radial direction between the pin and the groove. Since the position of the pin that transmits a torque from the clutch ring to the hub is shifted outward in the axial direction due to the inclination of the clutch ring, force applied to the pin causes a moment that further inclines the clutch ring. As a result, the moment of the clutch ring is increased. Since the increased moment increases friction between the pin and the groove, the internal circulation torque at the time of gear shift is increased. This results in an increase in noise and vibration which are generated when the internal circulation torque is released and the gear shift is completed.

The present invention is made to solve the above problem, and an object of the present invention is to provide a transmission capable of reducing noise and vibration that occur at the time of gear shift.

MEANS FOR SOLVING THE PROBLEM

In order to achieve the object, a transmission according to claim 1 is provided, wherein the transmission according to the present invention includes a positive clutch configured to selectively connect, to a shaft, any of a plurality of gears disposed on the shaft and having different numbers of teeth. Each gear has first dog teeth formed at an end surface thereof in an axial direction. The positive clutch includes: an annular hub connected to the shaft, and having, at an outer peripheral surface thereof, grooves formed in parallel to the shaft; an annular clutch ring having, at an inner peripheral surface thereof, teeth formed in parallel to the shaft, and having, at an end surface thereof, second dog teeth to be meshed with the first dog teeth when the teeth are fitted in the grooves and thereby the clutch ring moves in the axial direction; and a shift device configured to set a position in the axial direction of the clutch ring. Each of the first dog teeth has a first surface facing one side in a circumferential direction, and a second surface facing the other side in the circumferential direction. Each of the second dog teeth has a third surface opposing the first surface, and a fourth surface opposing the second surface. The first surface and the third surface are inclined surfaces that generate a thrust that separates the gear and the clutch ring from each other in the axial direction, according to a torque in a direction in which the first surface and the third surface are brought into contact with each other. The second surface and the fourth surface do not cause the gear and the clutch ring to be separated from each other in the axial direction, when the second surface and the fourth surface are brought into contact with each other to transmit a torque. When gear shift is performed, the shift device brings the first surface of one said gear into contact with the third surface of the clutch ring, and brings the second surface of another said gear into contact with the fourth surface of the clutch ring. The clutch ring includes an annular ring, and the second dog teeth protrude in the axial direction from an end surface of the ring, and the teeth are formed at inner sides of the second dog teeth. The second dog teeth include third teeth, and fourth teeth having a length shorter in the axial direction than a length in the axial direction of the third teeth, and the teeth are formed only at the inner sides of the third teeth

## ADVANTAGEOUS EFFECTS OF THE INVENTION

According to the transmission of claim 1, the grooves are formed in parallel to the shaft at the outer peripheral surface of the annular hub connected to the shaft, and the teeth are formed in parallel to the shaft at the inner peripheral surface of the annular clutch ring. When the teeth are fitted in the grooves, the clutch ring moves in the axial direction while transmitting the torque. As a result, force is applied to the teeth parallel to the shaft. Therefore, even when there are gaps in the radial direction between the teeth and the grooves, a part, of the teeth, extending in the axial direction comes into contact with a part, of the grooves, extending in the axial direction, whereby a moment of the clutch ring can be reduced. Moreover, since inclination of the clutch ring with respect to the hub can be reduced, friction of the teeth rubbing against the grooves can be reduced. As a result, the internal circulation torque can be reduced, thereby reducing noise and vibration that are caused by the internal circulation torque being released at the time of gear shift.

Further, in the clutch ring, the second dog teeth protrude in the axial direction from the end surface of the annular ring. Since the teeth are formed at the inner sides of the second dog teeth, the length of the teeth in the axial direction can be ensured as compared to the case where the teeth are formed only at the inner side of the ring. As a result, the clutch ring can be made harder to incline with respect to the hub, whereby noise and vibration can be easily reduced at the time of gear shift.

Further, as for the second dog teeth, the length in the axial direction of the third teeth is shorter than that of the fourth teeth. Therefore, when the clutch ring moves in the axial direction and the second dog teeth mesh with the first dog teeth, the third teeth of the clutch ring first mesh with the first dog teeth of the gear. Since the teeth are formed only at the inner sides of the third teeth, the torque is transmitted between the clutch ring and the hub via the first dog teeth, the third teeth, and the teeth. Therefore, breakage of the ring starting from corners formed by the third teeth and the ring can be inhibited as compared to the case where the teeth are formed at the inner sides of the fourth teeth and the ring while no teeth are formed at the inner sides of the third teeth. Moreover, reduction in the cross section area of the clutch ring due to formation of the teeth can be inhibited as compared to the case where the teeth are formed not only at the inner sides of the third teeth but also at the inner sides of the fourth teeth and the ring. Therefore, durability of the clutch ring can be improved.

According to the transmission of claim 2, assuming that inclination angles of the first surface and the third surface with respect to an imaginary plane parallel to the shaft are θ, the radius of a circle passing the center of gravity of the third surface is Rd, a coefficient of friction between the first surface and the third surface is μd, the radius of a reference circle defined by the grooves is Rh, and a coefficient of friction between the grooves and the teeth is μh, $\tan(\theta-\mu d)/Rd-\mu h/Rh>0$ is satisfied. Since a thrust in the axial direction due to the inclination angle θ causes the gear and the clutch ring to be separated from each other in the axial direction, according to the internal circulation torque, a shock at the time of gear shift can be reduced, in addition to the effects of claim 1.

According to the transmission of claim 3, the positive clutch has a gap in the circumferential direction between the first surface and the third surface, when the second surface and the fourth surface are brought into contact with each other to transmit a torque, and has a gap in the circumferential direction between the second surface and the fourth surface, when the first surface and the third surface are brought into contact with each other to transmit a torque. The shift device includes a regulation portion configured to restrict movement of the clutch ring in the axial direction, when the first surface and the third surface are brought into contact with each other to transmit a torque. Therefore, torque interruption can be avoided, in addition to the effects of claims 1 or 2.

5    EP 4 043 755 B1    6

## BRIEF DESCRIPTION OF THE DRAWINGS

[FIG. 1] Skeleton diagram showing a transmission according to an embodiment of the present invention;
[FIG. 2] Perspective view of a clutch ring.
[FIG. 3] Perspective view of a hub on which the clutch ring is disposed.
[FIG. 4] Schematic diagram showing the transmission during coast traveling at a low speed stage.
[FIG. 5] Schematic diagram showing the transmission during drive traveling at a low speed stage.
[FIG. 6] Schematic diagram showing the transmission during shift-up from a low speed stage to a high speed stage.
[FIG. 7] Schematic diagram showing the transmission during drive traveling at a high speed stage.

## MODES FOR CARRYING OUT THE INVENTION

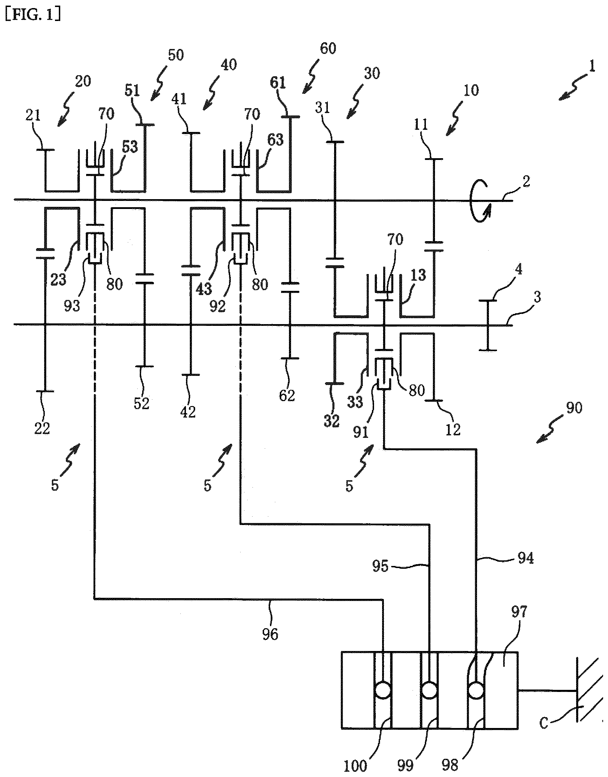

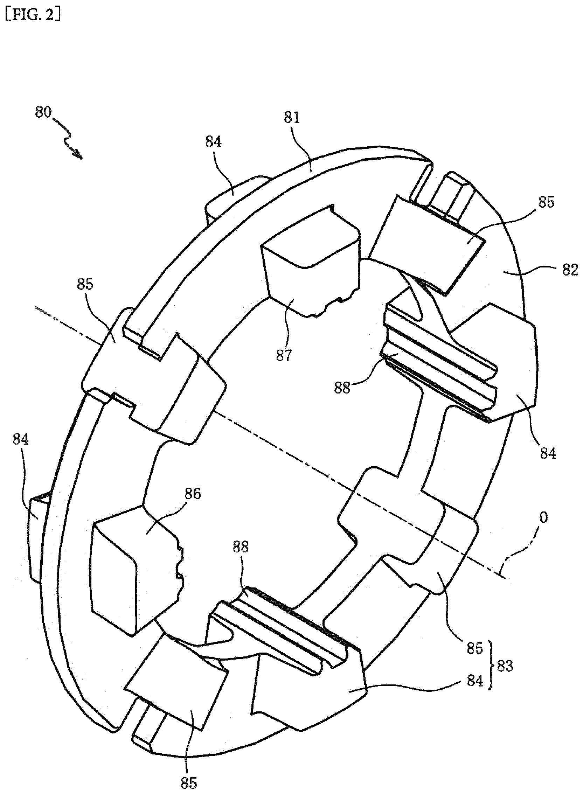

Hereinafter, a preferred embodiment of the present invention will be described with reference to the accompanying drawings. First, a schematic configuration of a transmission 1 of the present invention will be described with reference to FIG. 1. FIG. 1 is a skeleton diagram showing the transmission 1 according to an embodiment. The transmission 1 includes a driving shaft 2 to which power is applied, and a driven shaft 3 disposed in parallel to the driving shaft 2. An output gear 4 is disposed around the driven shaft 3. The driving shaft 2 and the driven shaft 3 support a plurality of stages of shift gears, i.e., a first speed gear 10, a second speed gear 20, a third speed gear 30, a fourth speed gear 40, a fifth speed gear 50, and a sixth speed gear 60. In this embodiment, the transmission 1 is mounted on an automobile (not shown).
The first speed gear 10 includes: a driving gear 11 fixed to the driving shaft 2 so as to be non-rotatable relative to the driving shaft 2; and a driven gear 12 fixed to the driven shaft 3 so as to be rotatable relative to the driven shaft 3 while meshing with the driving gear 11. The second speed gear 20 includes: a driving gear 21 fixed to the driving shaft 2 so as to be rotatable relative to the driving shaft 2; and a driven gear 22 fixed to the driven shaft 3 so as to be non-rotatable relative to the driven shaft 3 while meshing with the driving gear 21. The third speed gear 30 includes: a driving gear 31 fixed to the driving shaft 2 so as to be non-rotatable relative to the driving shaft 2; and a driven gear 32 fixed to the driven shaft 3 so as to be rotatable relative to the driven shaft 3 while meshing with the driving gear 31. The fourth speed gear 40 includes: a driving gear 41 fixed to the driving shaft 2 so as to be rotatable relative to the driving shaft 2; and a driven gear 42 fixed to the driven shaft 3 so as to be non-rotatable relative to the driven shaft 3 while meshing with the driving gear 41. The fifth speed gear 50 includes: a driving gear 51 fixed to the driving shaft 2 so as to be rotatable relative to the driving shaft 2; and a driven gear 52 fixed to the driven shaft 3 so as to be non-rotatable relative to the driven shaft 3 while meshing with the driving gear 51. The sixth speed gear 60 includes: a driving gear 61 fixed to the driving shaft 2 so as to be rotatable relative to the driving shaft 2; and a driven gear 62 fixed to the driven shaft 3 so as to be non-rotatable relative to the driven shaft 3 while meshing with the driving gear 61.
Each of positive clutches 5, which selectively connects a gear to the driving shaft 2 or the driven shaft 3, includes: a hub 70 connected to the driving shaft 2 or the driven shaft 3; a clutch ring 80 disposed on the hub 70; and a shift device 90 that sets the position in the axial direction of the clutch ring 80.
The hub 70 is an annular member fixed to each of the driven shaft 3 between the driven gear 12 and the driven gear 32, the driving shaft 2 between the driving gear 21 and the driving gear 51, and the driving shaft 2 between the driving gear 41 and the driving gear 61 so as to be non-rotatable relative to the shafts. At end surfaces in the axial direction of the driven gears 12, 32 and the driving gears 21, 41, 51, 61, first dog teeth 13, 33, 23, 43, 53, 63 are respectively disposed so as to protrude in the axial direction toward the hub 70 side.
The clutch ring 80 is an annular member mounted to the hub 70. The clutch ring 80 is disposed on the hub 70 so as to be non-rotatable relative to the hub 70 and to be movable in the axial direction. The clutch ring 80 includes second dog teeth 83 (see FIG. 2) protruding in the axial direction. When the clutch ring 80 moves in the axial direction and thereby the second dog teeth 83 selectively mesh with the first dog teeth 13, 33, 23, 43, 53, or 63, any of the first speed gear 10, the second speed gear 20, the third speed gear 30, the fourth speed gear 40, the fifth speed gear 50, and the sixth speed gear 60 is selectively connected to the driving shaft 2 via the hub 70 and the clutch ring 80, whereby gear shift is performed.
The shift device 90 includes: shift forks 91, 92, 93 respectively engaged with the clutch rings 80; shift arms 94, 95, 96 respectively connected to the shift forks 91, 92, 93; and a cylindrical shift drum 97. The shift drum 97 is fixed to a casing C and is rotated around a shaft by a motor (not shown). End portions of the shift arms 94, 95, 96 are engaged with cam grooves 98, 99, 100 formed at the outer periphery of the shift drum 97.
The shift drum 97 is rotated based on an operating signal of a shift lever (not shown) or on an accelerator position signal, a vehicle speed signal, and the like due to an operation performed on an accelerator pedal (not shown). When the shift drum 97 is rotated, the shift forks 91, 92, 93 move in the axial direction via the shift arms 94, 95, 96 guided by the cam grooves 98, 99, 100, respectively. The shift forks 91, 92, 93 cause the clutch rings 80 to move in the axial direction.
The clutch ring 80 will be described with reference to FIG. 2. FIG. 2 is a perspective view of the clutch

4

ring 80. As shown in FIG. 2, the clutch ring 80 includes: a ring 81 annularly extending around a center axis O; and a plurality of second dog teeth 83 protruding from end surfaces 82 in the axial direction of the ring 81 toward both sides in the axial direction. The center axis O of the clutch ring 80 disposed on the driving shaft 2 or the driven shaft 3 is aligned with the center axis of the driving shaft 2 or the driven shaft 3. The second dog teeth 83 include third teeth 84, and fourth teeth 85 having a length in the axial direction shorter than that of the third teeth 84. Each of the second dog teeth 83 includes: a third surface 86 facing one side in the circumferential direction; and a fourth surface 87 that is opposite to the third surface 86 and faces the other side in the circumferential direction.

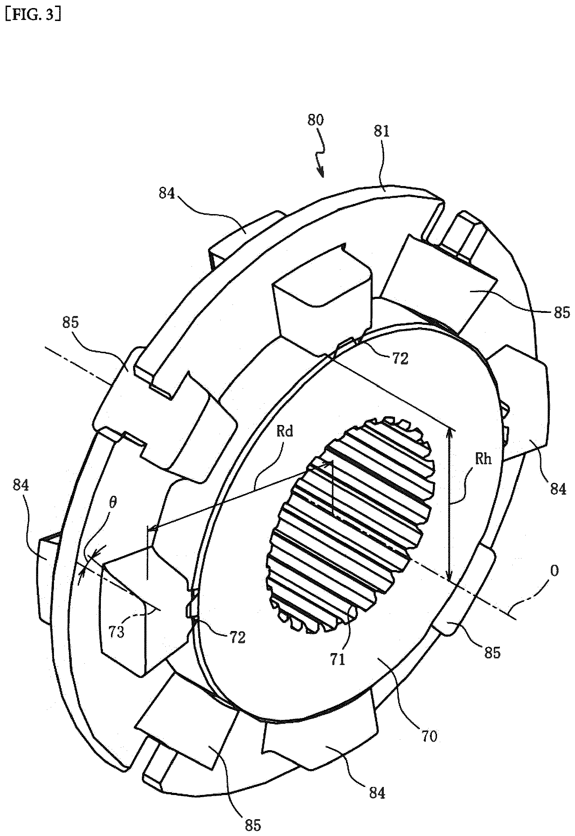

In the present embodiment, the ring 81 is divided into four parts in the circumferential direction. The second dog teeth 83 are joined to the ring 81 through welding or the like. The ring 81 connects the second dog teeth 83 at intervals in the circumferential direction. The third teeth 84 and the fourth teeth 85, of the second dog teeth 83, are alternately disposed in the circumferential direction. Each third surface 86 is an inclined surface with respect to an imaginary plane 73 parallel to the center axis O (see FIG. 3). Each fourth surface 87 is a surface parallel to the center axis O. At an inner peripheral surface of the clutch ring 80, teeth 88 parallel to the center axis O are formed. In the present embodiment, the teeth 88 are formed only at the inner sides of the third teeth 84. The teeth 88 extend over the whole length of each third tooth 84.

At a portion, of the inner surface of the ring 81 facing the center axis O, which is contiguous to the third teeth 84, teeth 88 parallel to the center axis O are formed. The teeth 88 are contiguous, without breaks, over the ring 81 and the third teeth 84 protruding from the end surfaces 82 of the ring 81. This makes the teeth 88 highly resistant to breaking.

In the present embodiment, the teeth 88 are formed only on the second dog teeth 83. The case where "the teeth 88 are formed only on the second dog teeth 83" includes a case where teeth contiguous to the teeth 88 of the second dog teeth 83 are formed at the inner surface of the ring 81 as well as on the second dog teeth 83. However, the above case does not include a case where teeth not contiguous to the teeth 88 of the second dog teeth 83 are formed at the inner surface of the ring 81.

FIG. 3 is a perspective view of the hub 70 on which the clutch ring 80 is disposed. At an inner peripheral surface of the hub 70, splines 71 to be connected to the driving shaft 2 or the driven shaft 3 (see FIG. 1) are formed. Grooves 72 parallel to the center axis O are formed at portions, of the outer peripheral surface of the hub 70, where the teeth 88 of the clutch ring 80 are disposed. The grooves 72 are formed over the whole length in the axial direction of the hub 70. Since the teeth 88 formed on the clutch ring 80 are fitted in the grooves 72 of the hub 70, the clutch ring 80 is movable in the axial direction with respect to the hub 70, but is not rotatable around the hub 70.

The clutch ring 80 moves in the axial direction while transmitting the torque, with the teeth 88 being fitted in the grooves 72 of the hub 70. As a result, force is applied to the teeth 88 parallel to the center axis O. Therefore, even when there are gaps in the radial direction between the teeth 88 and the grooves 72, portions, of the teeth 88, extending in the axial direction come into contact with portions, of the grooves 72, extending in the axial direction, whereby a moment of the clutch ring 80 is reduced, and inclination of the clutch ring 80 with respect to the center axis O of the hub 70 can be reduced.

In the present embodiment, since the grooves 72 are formed at (four) portions of the hub 70, the amount of processing of the grooves 72 can be reduced as compared to the case where the grooves 72 are formed over the entire circumference of the hub 70. However, the present invention is not necessarily limited thereto. As a matter of course, the grooves 72 can be formed over the entire circumference of the hub 70.

The shapes of the grooves 72 and the teeth 88 are not particularly limited. The shapes of the grooves 72 and the teeth 88 may be set as appropriate. For example, the grooves 72 and the teeth 88 each may have a rectangular shape or a shape surrounded by a curve such as an involute curve, when viewed from the side. As a matter of course, the teeth 88 may be provided with balls or rollers that roll in the grooves 72, or the grooves 72 may be provided with balls or rollers that cause the teeth 88 to roll. Thus, friction between the teeth 88 and the grooves 72 can be further reduced.

The third surface 86 of each second dog tooth 83 is inclined so as to approach the fourth surface 87 with an increase in the distance from the ring 81 in the axial direction. An inclination angle of the third surface 86 with respect to the imaginary plane 73 parallel to the center axis O is $\theta$. A radius Rd of a circle passing the center of gravity of the third surface 86 (a distance between the center axis O and the center of gravity of the third surface 86) is larger than a radius Rh of a reference circle defined by the grooves 72 (a distance between the center axis O and the reference circle defined by the grooves 72) by a thickness in the radial direction of the second dog tooth 83.

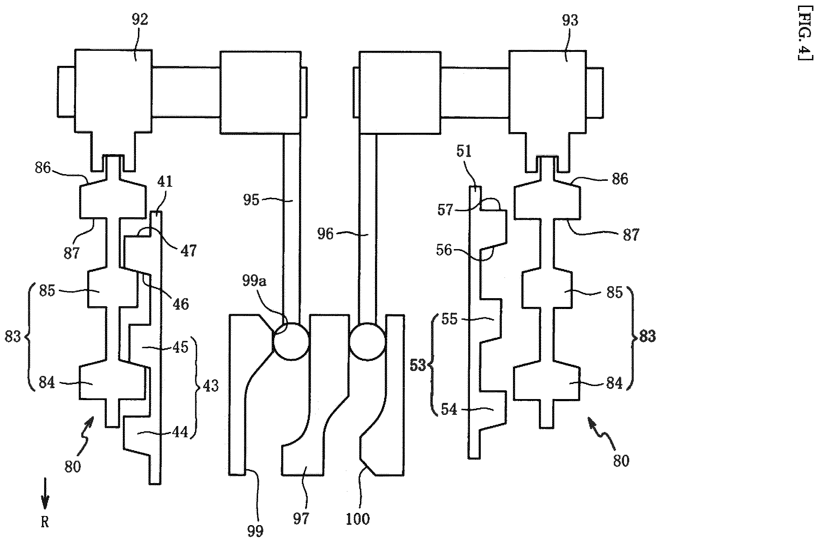

An operation of the transmission 1 at the time of gear shift (shift-up) to a higher speed stage will be described with reference to FIG. 4 to FIG. 7. In the present embodiment, shift-up from the fourth speed gear 40 to the fifth speed gear 50 is described as an example. Since an operation for gear shift to another stage is similarly performed, descriptions of shift-up and shift-down operations regarding other stages will be omitted.

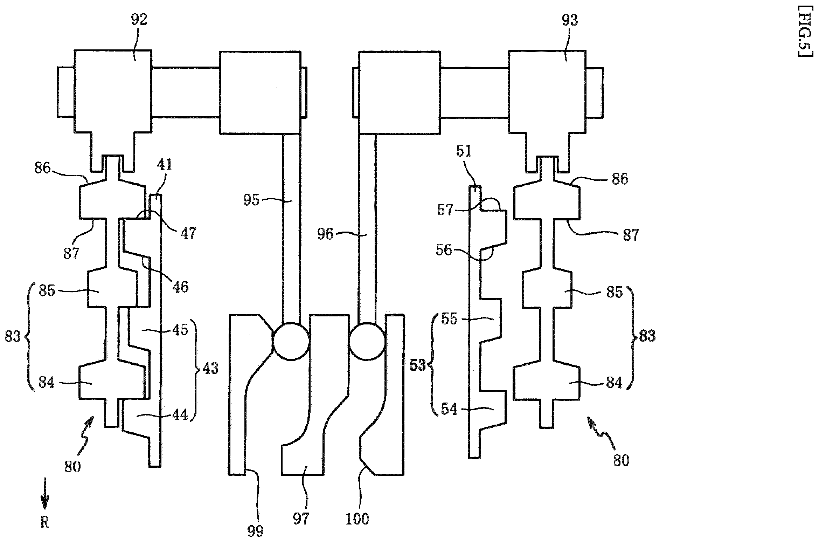

First, an operation of the transmission 1 at a low speed stage (fourth speed gear 40) will be described with reference to FIG. 4 and FIG. 5. FIG. 4 is a schematic diagram showing the transmission 1 during coast traveling at the low speed stage (fourth speed gear 40). FIG. 5 is a schematic diagram showing the transmission 1 during drive traveling at the low speed stage (fourth speed gear 40). In FIG. 4 to FIG. 7, the rotation direction of the driving gears 41, 51, the hubs 70, and the clutch rings 80 is a downward direction (direction of an arrow R) along the drawing sheet.

As shown in FIG. 4, the driving gear 41 has, at an end surface thereof in the axial direction, the first dog teeth 43 that mesh with the second dog teeth 83 of the clutch ring 80. The first dog teeth 43 include first teeth 44, and second teeth 45 having a length shorter in the axial direction than that of the first teeth 44. Each of the first dog teeth 43 has: a first surface 46 facing one side in the circumferential direction; and a second surface 47 that is opposite to the first surface 46 and faces the other side in the circumferential direction. The first surface 46 opposes the third surface 86 of the clutch ring 80. The second surface 47 opposes the fourth surface 87 of the clutch ring 80.

The first surface 46 and the third surface 86 are inclined surfaces that generate a thrust that separates the driving gear 41 and the clutch ring 80 from each other in the axial direction, according to a torque in a direction in which the first surface 46 and the third surface 86 are brought into contact with each other. The first surface 46 is inclined so as to approach the second surface 47 with an increase in the distance from the driving gear 41. An inclination angle θ of the first surface 46 with respect to the imaginary plane 73 (see FIG. 3) parallel to the center axis O is the same as the inclination angle θ of the third surface 86.

When the second surface 47 and the fourth surface 87 are brought into contact with each other to transmit a torque, the second surface 47 and the fourth surface 87 do not cause the driving gear 41 and the clutch ring 80 to be separated from each other in the axial direction. In the present embodiment, the second surface 47 is a surface parallel to the center axis O.

The driving gear 51 has, at an end surface thereof in the axial direction, first dog teeth 53 that mesh with the second dog teeth 83 of the clutch ring 80. The first dog teeth 53 include first teeth 54, and second teeth 55 having a length shorter in the axial direction than that of the first teeth 54. Each of the first dog teeth 53 has: a first surface 56 facing one side in the circumferential direction; and a second surface 57 that is opposite to the first surface 56 and faces the other side in the circumferential direction. The first surface 56 opposes a third surface 86 of the clutch ring 80. The second surface 57 opposes a fourth surface 87 of the clutch ring 80.

The first surface 56 and the third surface 86 are inclined surfaces that generate a thrust that separates the driving gear 51 and the clutch ring 80 from each other in the axial direction, according to a torque in a direction in which the first surface 56 and the third surface 86 are brought into contact with each other. The first surface 56 is inclined so as to approach the second surface 57 with an increase in the distance from the driving gear 51. An inclination angle θ of the first surface 56 with respect to the imaginary plane 73 (see FIG. 3) parallel to the center axis O is the same as the inclination angle θ of the third surface 86.

When the second surface 57 and the fourth surface 87 are brought into contact with each other to transmit a torque, the second surface 57 and the fourth surface 87 do not cause the driving gear 51 and the clutch ring 80 to be separated from each other in the axial direction. In the present embodiment, the second surface 57 is a surface parallel to the center axis O.

During the fourth-speed traveling shown in FIG. 4, the shift fork 92 is brought close to the driving gear 41 of the fourth speed gear 40 by the shift arm 95 and the cam groove 99 of the shift drum 97, and the second dog teeth 83 of the clutch ring 80 mesh with the first dog teeth 43 of the driving gear 41. At this time, the teeth 88 of the clutch ring 80 are fitted in the grooves 72 of the hub 70, and the clutch ring 80 moves in the axial direction. Since the teeth 88 are formed at the inner sides of the second dog teeth 83 (third teeth 84), the length of the teeth 88 in the axial direction can be ensured as compared to the case where the teeth 88 are formed only at the inner side of the ring 81. As a result, when the clutch ring 80 moves in the axial direction, the clutch ring 80 can be made harder to incline with respect to the hub 70. Meanwhile, in the fifth speed gear 50, the second dog teeth 83 of the clutch ring 80 and the first dog teeth 53 of the driving gear 51 are separated from each other in the axial direction by the shift drum 97.

During coast traveling in which power is transmitted from the driven gear 42 to the driving gear 41 of the fourth speed gear 40 (see FIG. 1), since the driving gear 41 rotates faster than the clutch ring 80, the first surfaces 46 of the driving gear 41 come into contact with the third surfaces 86 of the clutch ring 80. At this time, a gap in the circumferential direction is generated between each second surface 47 and the corresponding fourth surface 87.

The first surfaces 46 and the third surfaces 86 generate a thrust that separates the driving gear 41 and the clutch ring 80 from each other in the axial direction, according to a torque during coasting. However, since a top portion 99a (regulation portion) of the cam groove 99 of the shift drum 97 restricts movements in the axial direction of the shift arm 95 and the shift fork 92, meshing of the second dog teeth 83 of the clutch ring 80 with the first dog teeth 43 of the driving gear 41 is maintained, thereby maintaining the state where the third surfaces 86 of the clutch ring 80 are in contact with the first surfaces 46 of the driving gear 41.

As shown in FIG. 5, during drive traveling in which power is transmitted from the driving gear 41 to the driven gear 42 (see FIG. 1), since the clutch ring 80 rotates faster than the driving gear 41, the fourth surfaces 87 of the clutch ring 80 come into contact with the second surfaces 47 of the driving gear 41. At this time, a gap in the circumferential direction is generated between each first surface 46 and the corresponding third surface 86.

When the second surfaces 47 and the fourth surfaces 87 are brought into contact with each other to transmit a torque, the driving gear 41 and the clutch ring 80 are not separated from each other in the axial direction. Therefore, gear slip-off can be prevented by: restriction of movements in the axial direction of the shift arm 95 and the shift fork 92 by using the top portion 99a of the cam groove 99 of the shift drum 97; and friction between the second surfaces 47 and the fourth surfaces 87, or the like, thereby transmitting the driving torque.

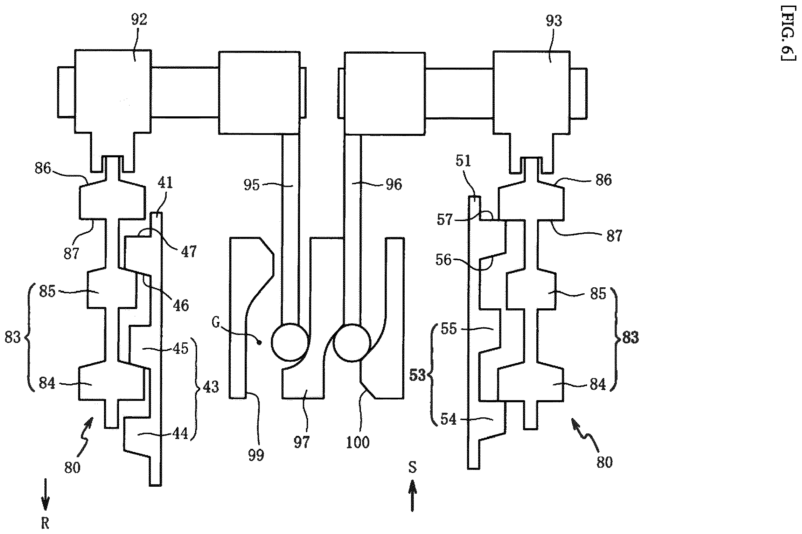

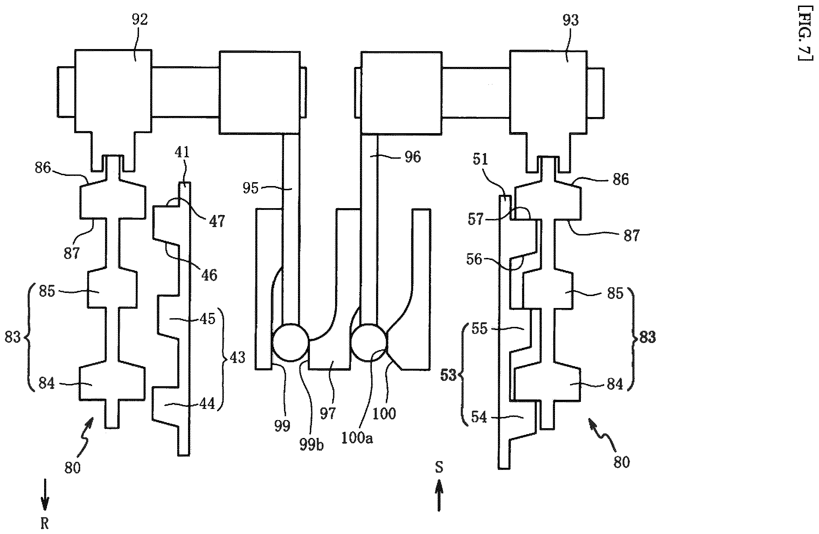

FIG. 6 is a schematic diagram showing the transmission 1 during shift-up from the low speed stage (fourth speed gear 40) to the high speed stage (fifth speed gear 50). FIG. 7 is a schematic diagram of the transmission 1 during drive traveling at the high speed stage (fifth speed gear 50). An arrow S shown in FIG. 6 and FIG. 7 indicates a rotation direction of the shift drum 97 during the shift-up.

As shown in FIG. 6, during drive traveling in which power is transmitted from the driving gear 41 to the driven gear 42 (see FIG. 1), if a shift-up operation to the higher speed stage (fifth speed gear 50) is performed with the shift drum 97 being rotated, the shift fork 93 is brought close to the driving gear 51 of the fifth speed gear 50 by the shift arm 96 and the cam groove 100 of the shift drum 97, and the tips of the third teeth 84 of the clutch ring 80 come into contact with the tips of the first teeth 54 of the driving gear 51. Since the third teeth 84 of the clutch ring 80 have a length longer in the axial direction than that of the fourth teeth 85, the third teeth 84 of the second dog teeth 83 can be easily meshed with the first dog teeth 53 (first teeth 54) of the driving gear 51.

Meanwhile, in the fourth speed gear 40, the top portion 99a of the cam groove 99 releases the shift arm 96. Thus, a gap G, which allows the clutch ring 80 to be separated in the axial direction from the driving gear 41, is generated between the shift arm 96 and the cam groove 99. However, when power is transmitted from the driving gear 41 to the driven gear 42 (see FIG. 1) with the second surfaces 47 and the fourth surfaces 87 being in contact with each other in the fourth speed gear 40, a thrust that separates the driving gear 41 and the clutch ring 80 from each other in the axial direction is not generated, thereby maintaining the state where the second dog teeth 83 of the clutch ring 80 mesh with the first dog teeth 43 of the driving gear 41.

When the first dog teeth 53 (first teeth 54) of the driving gear 51 of the fifth speed gear 50 mesh with the second dog teeth 83 (third teeth 84) of the clutch ring 80 while the driving gear 41 of the fourth speed gear 40 meshes with the second dog teeth 83 of the clutch ring 80, since the fifth speed gear 50 rotates faster than the fourth speed gear 40, the fourth speed side enters the coasting state and the fifth speed side enters the driving state due to the internal circulation torque.

Since the fifth speed gear 50 is in the driving state in which the second surfaces 57 and the fourth surfaces 87 are in contact with each other, a thrust that separates the driving gear 51 and the clutch ring 80 from each other in the axial direction is not generated. Therefore, the shift fork 93 is brought closer to the driving gear 51 by the shift arm 96 and the cam groove 100 of the shift drum 97, and the second dog teeth 83 of the clutch ring 80 deeply mesh with the first dog teeth 53 of the driving gear 51.

Since the teeth 88 are formed only at the inner sides of the third teeth 84 of the clutch ring 80, when the third teeth 84 mesh with the first dog teeth 53, a torque is transmitted between the clutch ring 80 and the hub 70 via the first dog teeth 53, the third teeth 84, and the teeth 88. Thus, breakage, of the ring 81, which is caused by force in the rotation direction applied to the third teeth 84 when the third teeth 84 mesh with the first dog teeth 53 (first teeth 54) and which starts from corners formed by the third teeth 84 and the ring 81, can be inhibited as compared to the case where the teeth 88 are formed at the inner sides of the fourth teeth 85 and the ring 81 while no teeth 88 are formed at the inner sides of the third teeth 84.

Moreover, reduction in the cross section area of the clutch ring 80 due to the teeth 88 can be suppressed as compared to the case where the teeth 88 are formed not only at the inner sides of the third teeth 84 but also at the inner sides of the fourth teeth 85 and the ring 81. Therefore, durability of the clutch ring 80 can be improved. Moreover, the area of the teeth 88 rubbing against the groove 72 can be reduced as compared to the case where the teeth 88 are formed not only at the inner sides of the third teeth 84 but also at the inner sides of the fourth teeth 85 and the ring 81. Therefore, friction between the grooves 72 and the teeth 88 is prevented from increasing.

Meanwhile, since the fourth speed gear 40 is in the coasting state in which the first surfaces 46 are in contact with the third surfaces 86, the inclination angle $\theta$ of the first surfaces 46 and the third surfaces 86 causes a thrust that separates the driving gear 41 and the clutch ring 80 from each other in the axial direction, according to a torque. The teeth 88 formed at the inner peripheral surface of the clutch ring 80 are fitted in the grooves 72 formed at the outer peripheral surface of the hub 70, and the thrust causes the clutch ring 80 to move, while transmitting the torque, in the axial direction by an amount corresponding to the gap G of the cam groove 99.

As a result, since portions, of the grooves 72, extending in the axial direction come into contact with portions, of the teeth 88, extending in the axial direction, the clutch ring 80 is hardly inclined with respect to the hub 70, thereby reducing the moment of force of the clutch ring 80. Thus, friction of the teeth 88 moving in the axial direction while rubbing against the grooves 72 can be reduced, thereby reducing the internal circulation torque. As a result, it is possible to reduce noise and vibration that are caused by the internal circulation torque being released when the driving gear 41 and the clutch ring 80 are separated from each other in the axial direction.

It is assumed that the inclination angle of the first surface 46 and the third surface 86 is θ, the radius of the circle passing the center of gravity of each third surface 86 is Rd, the radius of the reference circle defined by the grooves 72 is Rh, the coefficient of friction between the first surfaces 46 and the third surfaces 86 is μd, and the coefficient of friction between the grooves 72 and the teeth 88 is ph. At this time, the hub 70 and the clutch ring 80 are set so as to satisfy tan(θ-μd)/Rd-μh/Rh>0. Thus, a thrust in the axial direction due to the inclination angle θ of the first surface 46 and the third surface 86 allows the driving gear 41 and the clutch ring 80 to be smoothly separated from each other in the axial direction according to the internal circulation torque. Therefore, shock at the time of gear shift can be reduced.

As shown in FIG. 7, when the shift-up to the fifth speed gear 50 has been completed by the shift drum 97, the top portion 99b of the cam groove 99 of the shift drum 97 restricts movements of the shift arm 95 and the shift fork 92 in the axial direction in the fourth speed gear 40. Thus, the clutch ring 80 and the driving gear 41 are maintained in the separated state. In the fifth speed gear 50, since a top portion 100a of the cam groove 100 of the shift drum 97 restricts movements of the shift arm 96 and the shift fork 93 in the axial direction, the second dog teeth 83 of the clutch ring 80 and the first dog teeth 53 of the driving gear 51 are maintained in the meshed state.

During drive traveling in which power is transmitted from the driving gear 51 to the driven gear 52 (see FIG. 1), since the clutch ring 80 rotates faster than the driving gear 51, the fourth surfaces 87 of the clutch ring 80 come into contact with the second surfaces 57 of the driving gear 51. At this time, a gap in the circumferential direction is generated between each first surface 56 and the corresponding third surface 86.

When the second surfaces 57 and the fourth surfaces 87 are brought into contact with each other to transmit a torque, the driving gear 51 and the clutch ring 80 are not separated from each other in the axial direction. Therefore, gear slip-off can be prevented by: restriction of movements in the axial direction of the shift arm 96 and the shift fork 93 by using the top portion 100a of the cam groove 100 of the shift drum 97; and friction between the second surfaces 57 and the fourth surfaces 87, or the like, thereby transmitting the driving torque.

During coast traveling in which power is transmitted from the driven gear 52 (see FIG. 1) to the driving gear 51, since the driving gear 51 rotates faster than the clutch ring 80, the first surfaces 56 of the driving gear 51 come into contact with the third surfaces 86 of the clutch ring 80. At this time, a gap in the circumferential direction is generated between each second surface 57 and the corresponding fourth surface 87.

The first surfaces 56 and the third surfaces 86 generate a thrust that separates the driving gear 51 and the clutch ring 80 from each other in the axial direction, according to the torque during coasting. However, since the top portion 100a (regulation portion) of the cam groove 100 of the shift drum 97 restricts movements in the axial direction of the shift arm 96 and the shift fork 93, meshing of the second dog teeth 83 of the clutch ring 80 with the first dog teeth 53 of the driving gear 51 is maintained, thereby maintaining the state where the third surfaces 86 of the clutch ring 80 are in contact with the first surfaces 56 of the driving gear 51.

As described above, in the transmission 1, at the time of shift-up from the low speed stage to the high speed stage, when the second dog teeth 83 of the clutch ring 80 are meshed with the first dog teeth 43, 53 of two shift gears having different gear ratios (i.e., the fourth speed gear 40 and the fifth speed gear 50), the clutch ring 80 connected to the low-speed-stage shift gear (fourth speed gear 40) the number of rotations of which is smaller than that of the high-speed-stage shift gear (fifth speed gear 50) is pushed out in the axial direction by the thrust generated between the first surfaces 46 and the third surfaces 86, according to the internal circulation torque. When the high-speed-stage shift gear (fifth speed gear 50) is connected to the clutch ring 80, the low-speed-stage shift gear (fourth speed gear 40) is separated from the clutch ring 80 and thereby the high speed stage is established. Thus, torque interruption at the time of gear shift can be avoided.

Since the clutch ring 80 moves in the axial direction with the teeth 88 fitting in the grooves 72 of the hub 70, the clutch ring 80 is hardly inclined with respect to the hub 70, thereby reducing the moment of the clutch ring 80. Thus, friction of the teeth 88 rubbing against the grooves 72 can be reduced, thereby reducing the internal circulation torque. As a result, it is possible to reduce noise and vibration that are caused by the internal circulation torque being released at the time of gear shift.

While the present invention, which is defined by the appended claims, has been described with reference to the embodiment, the present invention is not limited to the above embodiment at all. For example, the number of gear shift stages of the transmission 1, the shapes of the cam grooves 99, 100 formed on the shift drum 97, the number and the shape of the grooves 72 formed on the hub 70, the number and the shape of the teeth 88 formed on the clutch ring 80, and the like can be set as appropriate.

In the above embodiment, the first teeth 44, 54 and the second teeth 45, 55 of the first dog teeth 43, 53 are alternately disposed. However, the present invention is not necessarily limited thereto. The positions where the first teeth 44, 54 and the second teeth 45, 55 are disposed and the numbers of the respective teeth can be set as appropriate.

In the above embodiment, the third teeth 84 and the fourth teeth 85 of the second dog teeth 83 are alternately disposed. However, the present invention is not necessarily limited thereto. The positions where the third teeth 84 and the fourth teeth 85 are disposed and the numbers of the respective teeth can be set as appropriate.

In the above embodiment, the transmission 1 is mounted on an automobile. However, as a matter of course, the transmission 1 can be mounted not only on an automobile but also on construction machinery, an industrial vehicle, agriculture machinery, and the like. Also, in this case, the transmission 1 can solve torque interruption at the time of gear shift. As a result, idling of the driving shaft 2 is avoided, and fuel consumption can be improved.

In the above embodiment, the teeth 88 formed on the second dog teeth 83 of the clutch ring 80 are contiguous to the teeth formed at a portion, of the ring 81, sandwiched by the second dog teeth 83. However, the present invention is not necessarily limited thereto. As a matter of course, the teeth, of the teeth 88, formed at the portion of the ring 81 contiguous to the second dog teeth 83 can be omitted. The reason is as follows. Even when the teeth on the ring 81 are omitted, since the teeth 88 are formed on the second dog teeth 83 to which force is applied at the time of meshing, bending stress of the second dog teeth 83 can be reduced.

In the above embodiment, the teeth 88 are formed only at the inner sides of the third teeth 84 of the second dog teeth 83. However, the present invention is not necessarily limited thereto. As a matter of course, the teeth 88 can be formed not only at the inner sides of the third teeth 84 but also at the inner sides of the fourth teeth 85 and the ring 81. Moreover, as a matter of course, the teeth 88 can be formed on both the third teeth 84 and the fourth teeth 85.

In the above embodiment, the second surfaces 47, 57 of the first dog teeth 43, 53 included in the driving gears 41, 51 and the fourth surfaces 87 of the second dog teeth 83 are parallel to the center axis O. However, the present invention is not necessarily limited thereto. When a torque is transmitted with the second surfaces 47, 57 being in contact with the fourth surfaces 87, a resultant force of a component in the axial direction of force due to the torque and a component in the axial direction of friction generated between the second surfaces 47, 57 and the fourth surfaces 87 should not act in the direction in which the clutch ring 80 is separated from the driving gears 41, 51. As long as the above relationship is satisfied, the second surfaces 47, 57 and the fourth surfaces 87 may be inclined with respect to the imaginary plane 73 parallel to the center axis O.

DESCRIPTION OF REFERENCE NUMERALS

1: transmission
2: driving shaft
3: driven shaft
5: positive clutch
21, 41, 51, 61: driving gear
12, 32: driven gear
13, 33, 23, 43, 53, 63: first dog teeth
46, 56: first surface
47, 57: second surface
70: hub
72: groove
73: imaginary plane
80: clutch ring
81: ring
82: end surface of the ring
83: second dog teeth
84: third teeth
85: fourth teeth
86: third surface
87: fourth surface
88: teeth
90: shift device
99a, 100a: top portion (regulation portion)

**Claims**

1. A transmission(1) including a positive clutch(5) configured to selectively connect a gear(41, 51) to a shaft(2), the gear(41, 51) having first dog teeth(43, 53) formed at an end surface thereof in an axial direction, the gear(41, 53) being disposed around the shaft(2), wherein
the positive clutch(5) comprises:

   an annular hub(70) connected to the shaft(2), and having, at an outer peripheral surface thereof, grooves(72) formed in parallel to the shaft(2);
   an annular clutch ring(80) having, at an inner peripheral surface thereof, teeth(88) formed in parallel to the shaft(2), and having, at an end surface(82) thereof, second dog teeth(83) to be meshed with the first dog teeth(43) when the teeth(88) are fitted in the grooves(72) and thereby the clutch ring(80) moves in the axial direction; and
   a shift device(90) configured to set a position in the axial direction of the clutch ring(80),
   each of the first dog teeth(43, 53) has a first surface(46, 56) facing one side in a circumferential direction, and a second surface(47, 57) facing the other side in the circumferential direction,
   each of the second dog teeth(83) has a third surface(86) opposing the first surface(46, 56), and a fourth surface(87) opposing the second surface(47, 57),
   the first surface(46) and the third surface(86) are inclined surfaces that are configured such that they generate a thrust that separates the gear(41, 51) and the clutch ring(80) from each other in the axial direction, according to a torque in a direction in which the first surface(46, 56) and the third surface(86) are brought into contact with each other,

the second surface(47, 57) and the fourth surface(87) are configured such that they do not cause the gear(41, 51) and the clutch ring(80) to be separated from each other in the axial direction, when the second surface(47, 57) and the fourth surface(87) are brought into contact with each other to transmit a torque, and

when gear shift is performed, the shift device(90) is configured to bring the first surface(46) of one said gear(41) into contact with the third surface(86) of the clutch ring(80), and to bring the second surface(57) of another said gear(51) into contact with the fourth surface(87) of the clutch ring(80), **characterized in that**

the clutch ring(80) includes an annular ring(81), and the second dog teeth(83) protrude in the axial direction from an end surface(82) of the ring(81), and

the teeth(88) are formed at inner sides of the second dog teeth(83), and wherein

the second dog teeth(83) include third teeth(84), and fourth teeth(85) having a length shorter in the axial direction than a length in the axial direction of the third teeth(84), and

the teeth(88) are formed only at the inner sides of the third teeth(84).

2. The transmission(1) according to claim 1, wherein assuming that inclination angles of the first surface(46) and the third surface(86) with respect to an imaginary plane(73) parallel to the shaft(2) are θ, a radius of a circle passing a center of gravity of the third surface(86) is Rd, a coefficient of friction between the first surface(46) and the third surface(86) is μd, a radius of a reference circle defined by the grooves(72) is Rh, and a coefficient of friction between the grooves(72) and the teeth(88) is μh,

$$\tan(\theta-\mu d)/Rd - \mu h/Rh > 0$$

is satisfied.

3. The transmission(1) according to claim 1 or 2, wherein

the positive clutch(5) has a gap in the circumferential direction between the first surface(46) and the third surface(86), when the second surface(47) and the fourth surface(87) are brought into contact with each other to transmit a torque, and has a gap in the circumferential direction between the second surface(47) and the fourth surface(87), when the first surface(46) and the third surface(86) are brought into contact with each other to transmit a torque, and

the shift device(90) includes a regulation portion(99a, 100a) configured to restrict movement of the clutch ring(80) in the axial direction, when the first surface(46) and the third surface(86) are brought into contact with each other to transmit a torque.

**Patentansprüche**

1. Ein Getriebe mit einer formschlüssigen Kupplung (5), die dazu konfiguriert ist, ein Zahnrad (41, 51) mit einer Welle (2) selektiv zu verbinden, wobei das Zahnrad (41, 51) erste Klauenzähne (43, 53) aufweist, die an einer Endfläche davon in einer axialen Richtung ausgebildet sind, und wobei das Zahnrad (41, 53) um die Welle (2) herum angeordnet ist, wobei

die formschlüssige Kupplung (5) umfasst:

eine ringförmige Nabe (70), die mit der Welle (2) verbunden ist und an ihrer äußeren Umfangsfläche Nuten (72) aufweist, die parallel zu der Welle (2) ausgebildet sind;

einen ringförmigen Kupplungsring (80), der an seiner inneren Umfangsfläche parallel zur Welle (2) ausgebildete Zähne (88) und an seiner Endfläche (82) zweite Klauenzähne (83) aufweist, die mit den ersten Klauenzähnen (43) kämmen, wenn die Zähne (88) in die Nuten (72) eingesetzt sind und sich der Kupplungsring (80) dadurch in axialer Richtung bewegt; und

eine Schaltvorrichtung (90), die dazu konfiguriert ist, eine Position in der axialen Richtung des Kupplungsrings (80) einzustellen, wobei

jeder der ersten Klauenzähne (43, 53) eine erste Oberfläche (46, 56) aufweist, die einer Seite in einer Umfangsrichtung zugewandt ist, und eine zweite Oberfläche (47, 57), die der anderen Seite in der Umfangsrichtung zugewandt ist,

jeder der zweiten Klauenzähne (83) eine dritte Oberfläche (86) aufweist, die der ersten Oberfläche (46, 56) gegenüberliegt, und eine vierte Oberfläche (87), die der zweiten Oberfläche (47, 57) gegenüberliegt,

die erste Oberfläche (46) und die dritte Oberfläche (86) geneigte Oberflächen sind, die so konfiguriert sind, dass sie einen Schub erzeugen, der das Zahnrad (41, 51) und den Kupplungsring (80) in der axialen Richtung gemäß einem Drehmoment in einer Richtung voneinander trennt, in der die erste Oberfläche (46, 56) und die dritte Oberfläche (86) in Kontakt miteinander gebracht werden,

die zweite Oberfläche (47, 57) und die vierte Oberfläche (87) so konfiguriert sind, dass sie nicht dazu führen, dass das Zahnrad (41, 51) und der Kupplungsring (80) in der axialen Richtung voneinander getrennt werden, wenn die zweite Oberfläche (47, 57) und die vierte Oberfläche (87) miteinander in Kontakt gebracht werden, um ein Drehmoment zu übertragen, und wenn ein Gangwechsel durchgeführt wird, die Schaltvorrichtung (90) dazu konfiguriert ist, die erste Oberfläche (46) eines der Zahnräder (41) in Kontakt mit der dritten Oberfläche (86) des Kupplungsrings (80) zu bringen, und die zweite Oberfläche (57) eines anderen der Zahnräder (51) in Kontakt mit der vierten Oberfläche (87) des Kupplungsrings (80) zu bringen, **dadurch gekennzeichnet, dass**

der Kupplungsring (80) einen ringförmigen Ring (81) beinhaltet und die zweiten Klauenzähne (83) in der axialen Richtung von einer Stirnfläche (82) des Rings (81) vorstehen, und

die Zähne (88) an Innenseiten der zweiten Klauenzähne (83) ausgebildet sind, und wobei

die zweiten Klauenzähne (83) dritte Zähne (84) und vierte Zähne (85), die eine Länge aufweisen, die in der axialen Richtung kürzer ist als eine Länge in der axialen Richtung der dritten Zähne (84), beinhalten, und

die Zähne (88) nur an den Innenseiten der dritten Zähne (84) ausgebildet sind.

2. Das Getriebe (1) nach Anspruch 1, wobei
unter der Annahme, dass die Neigungswinkel der ersten Oberfläche (46) und der dritten Oberfläche (86) in Bezug auf eine imaginäre Ebene (73), die parallel zur Welle (2) verläuft, θ sind, ein Radius eines Kreises, der durch die Mitte des Schwerpunkts der dritten Oberfläche (86) verläuft, Rd ist, ein Reibungskoeffizient zwischen der ersten Oberfläche (46) und der dritten Oberfläche (86) $\mu$d ist, ein Radius eines durch die Nuten (72) definierten Bezugskreises Rh ist und ein Reibungskoeffizient zwischen den Nuten (72) und den Zähnen (88) $\mu$h ist,

$$\tan(\theta-\mu d)/Rd-\mu h/Rh>0$$

erfüllt ist.

3. Das Getriebe (1) nach Anspruch 1 oder 2, wobei

die formschlüssige Kupplung (5) einen Spalt in der Umfangsrichtung zwischen der ersten Oberfläche (46) und der dritten Oberfläche (86) aufweist, wenn die zweite Oberfläche (47) und die vierte Oberfläche (87) in Kontakt miteinander gebracht werden, um ein Drehmoment zu übertragen, und einen Spalt in der Umfangsrichtung zwischen der zweiten Oberfläche (47) und der vierten Oberfläche (87) aufweist, wenn die erste Oberfläche (46) und die dritte Oberfläche (86) in Kontakt miteinander gebracht werden, um ein Drehmoment zu übertragen, und die Schaltvorrichtung (90) einen Regulierungsabschnitt (99a, 100a) beinhaltet, der dazu konfiguriert ist, die Bewegung des Kupplungsrings (80) in der axialen Richtung zu begrenzen, wenn die erste Oberfläche (46) und die dritte Oberfläche (86) in Kontakt miteinander gebracht werden, um ein Drehmoment zu übertragen.

**Revendications**

1. Une transmission (1) comprenant un embrayage positif (5) configuré pour connecter sélectivement un engrenage (41, 51) à un manche (2), l'engrenage (41, 51) ayant des premières dents de crabot (43, 53) formées au niveau d'une surface d'extrémité de celui-ci dans une direction axiale, l'engrenage (41, 53) étant disposé autour du manche (2), dans laquelle
l'embrayage positif (5) comprend :

un moyeu annulaire (70) connecté au manche (2), et ayant, au niveau d'une surface périphérique externe de celui-ci, des rainures (72) formées parallèlement au manche (2) ;
un anneau d'embrayage annulaire (80) ayant, au niveau d'une surface périphérique interne de celui-ci, des dents (88) formées parallèlement au manche (2), et ayant, au niveau d'une surface d'extrémité (82) de celui-ci, des deuxièmes dents de crabot (83) à engrener avec les premières dents de crabot (43) lorsque les dents (88) sont insérées dans les rainures (72) et ainsi l'anneau d'embrayage (80) se déplace dans la direction axiale ; et
un dispositif de changement (90) configuré pour établir une position dans la direction axiale de l'anneau d'embrayage (80),
chacune des premières dents de crabot (43, 53) a une première surface (46, 56) faisant face à un côté dans une direction circonférentielle, et une deuxième surface (47, 57) faisant face à l'autre côté dans la direction circonférentielle,
chacune des deuxièmes dents de crabot (83) a une troisième surface (86) opposée à la première surface (46, 56), et une quatrième surface (87) opposée à la deuxième surface (47, 57),
la première surface (46) et la troisième surface (86) sont des surfaces inclinées qui sont configurées de telle sorte qu'elles génèrent une poussée qui sépare l'engrenage (41, 51) et l'anneau d'embrayage (80) l'un de l'autre dans la direction axiale, en fonction d'un moment d'une force dans une direction dans laquelle la première surface (46, 56) et la troisième surface (86) sont mises en contact l'une avec l'autre,
la deuxième surface (47, 57) et la quatrième surface (87) sont configurées de telle sorte qu'elles n'amènent pas l'engrenage (41, 51) et l'anneau d'embrayage (80) à être séparés l'un de l'autre dans la direction axiale, lorsque la deuxième surface (47, 57) et la quatrième surface (87) sont mises en contact l'une avec l'autre pour transmettre un moment d'une force, et

lorsque le changement de vitesse est effectué, le dispositif de changement (90) est configuré pour mettre la première surface (46) d'un dit engrenage (41) en contact avec la troisième surface (86) de l'anneau d'embrayage (80), et pour mettre la deuxième surface (57) d'un autre dit engrenage (51) en contact avec la quatrième surface (87) de l'anneau d'embrayage (80), **caractérisée en ce que**

l'anneau d'embrayage (80) comprend un anneau annulaire (81), et les deuxièmes dents de crabot (83) font saillie dans la direction axiale à partir d'une surface d'extrémité (82) de l'anneau (81), et

les dents (88) sont formées au niveau de côtés intérieurs des deuxièmes dents de crabot (83), et dans laquelle

les deuxièmes dents de crabot (83) comprennent des troisièmes dents (84), et des quatrièmes dents (85) ayant une longueur plus courte dans la direction axiale qu'une longueur dans la direction axiale des troisièmes dents (84), et les dents (88) sont formées uniquement au niveau des côtés intérieurs des troisièmes dents (84).

2. La transmission (1) selon la revendication 1, dans laquelle

en supposant que des angles d'inclinaison de la première surface (46) et de la troisième surface (86) par rapport à un plan imaginaire (73) parallèle au manche (2) sont θ, un rayon d'un cercle passant par un centre de gravité de la troisième surface (86) est Rd, un coefficient de frottement entre la première surface (46) et la troisième surface (86) est μd, un rayon d'un cercle de référence défini par les rainures (72) est Rh, et un coefficient de frottement entre les rainures (72) et les dents (88) est μh,

$$\tan(\theta-\mu d)/Rd-\mu h/Rh>0$$

est satisfait.

3. La transmission (1) selon la revendication 1 ou 2, dans laquelle

l'embrayage positif (5) a un écart dans la direction circonférentielle entre la première surface (46) et la troisième surface (86), lorsque la deuxième surface (47) et la quatrième surface (87) sont mises en contact l'une avec l'autre pour transmettre un moment d'une force, et a un écart dans la direction circonférentielle entre la deuxième surface (47) et la quatrième surface (87), lorsque la première surface (46) et la troisième surface (86) sont mises en contact l'une avec l'autre pour transmettre un moment d'une force, et

le dispositif de changement (90) comprend une portion de régulation (99a, 100a) configurée pour restreindre un mouvement de l'anneau d'embrayage (80) dans la direction axiale, lorsque la première surface (46) et la troisième surface (86) sont mises en contact l'une avec l'autre pour transmettre un moment d'une force.

[FIG. 1]

[FIG. 2]

[FIG. 3]

[FIG. 4]

[FIG.5]

[FIG. 6]

[FIG. 7]

**EP 4 043 755 B1**

**REFERENCES CITED IN THE DESCRIPTION**

**Patent documents cited in the description**

- JP 2016061411 A
- US 4096932 A
- JP 2018044613 A